Europäisches Patentamt

European Patent Office

Office européen des brevets

(19)

(11) **EP 1 615 192 A1**

(12) **EUROPEAN PATENT APPLICATION**
published in accordance with Art. 158(3) EPC

(43) Date of publication:
**11.01.2006 Bulletin 2006/02**

(21) Application number: **04792577.1**

(22) Date of filing: **19.10.2004**

(51) Int Cl.:
**G09B 29/00** (1968.09)

(86) International application number:
**PCT/JP2004/015408**

(87) International publication number:
**WO 2005/038752 (28.04.2005 Gazette 2005/17)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **21.10.2003 JP 2003360631**

(71) Applicant: **MATSUSHITA ELECTRIC INDUSTRIAL CO., LTD.**
**Kadoma-shi, Osaka 571-8501 (JP)**

(72) Inventor: **ADACHI, Shinya**
**Yokohama-shi, Kanagawa 227-0038 (JP)**

(74) Representative: **Pautex Schneider, Nicole Véronique et al**
**Novagraaf International SA**
**25, Avenue du Pailly**
**1220 Les Avanchets - Geneva (CH)**

(54) **METHOD AND DEVICE FOR DETERMINING RESAMPLE LENGTH**

(57) A resample length L between sampling points to resample a linear object is set so that an error Er between the resample shape concatenating the sampling points as a line and the linear object does not exceed a predetermined allowable error. The allowable error is predefined and the resample length L is determined so as not to exceed the allowable error, so that the resample shape well follows the linear object.

## FIG. 1

EP 1 615 192 A1

**Description**

Technical Field

This invention relates to a determination method of the sampling point interval (resample length) to set a plurality of sampling points complying with the shape of a road, etc., on a digital map to generate coded data representing a road position, etc., a coded data generation method using the determination method, and an apparatus for carrying out the methods and proposes how to determine the resample length with a small error from the original shape and so as not to increase the data amount of the coded data.

Background Art

Hitherto, VICS (Vehicle Information Communication System) has conducted the service for providing vehicle information indicating a congestion zone and the travel time through FM multiplex broadcasting and beacon for a vehicle navigation system installing a digital map database. The vehicle navigation system receives the vehicle information and displays a colored congestion zone on a map displayed on a screen and calculates the required time to the destination for display.

Thus, to provide the vehicle information, it becomes necessary to pass position information of a road on a digital map. It is also necessary to report the recommended route and the run locus on a digital map to the associated party in the service for receiving the information on the current location and the destination and providing information on the recommended route through which the destination will be reached in the shortest time and a vehicle information collection system (probe information collection system) for collecting locus information, speed information, etc., from a running vehicle (probe car) advanced in study in recent years.

Hitherto, to report the road position on the digital map, generally the link numbers assigned to roads and the node numbers determining nodes such as intersections have been used. However, the node numbers and the link numbers defined in a road network need to be replaced with new numbers with new construction or change of a road and the digital map data produced by each company must also be updated accordingly and thus the system using the node numbers and the link numbers involves an enormous social cost for maintenance.

To improve such a point, JP-A-2003-23357 discloses a method of reporting the road position on the digital map without using the node numbers or the link numbers and in a small data amount.

In this method, sampling points are again set at given intervals in the road zone on the digital map to be reported (called "equal-distance resample") and compression coding processing is performed for the data string with the position data of the sampling points arranged in order, and the compressed and coded data is transmitted. At the reception party receiving the data, the data string of the position data of the sampling points is reconstructed and the road shape is reproduced on the digital map of the reception party. Using the position data, position determination and position reference are carried out (map matching) on the digital map of the reception party for determining the road zone, as required.

The compression coding for the data string of the position data is performed in the order of (1) conversion of position data to a single variable, (2) conversion of the value represented by the single variable to a value having a statistical bias, and (3) variable-length coding of the provided value as described later:

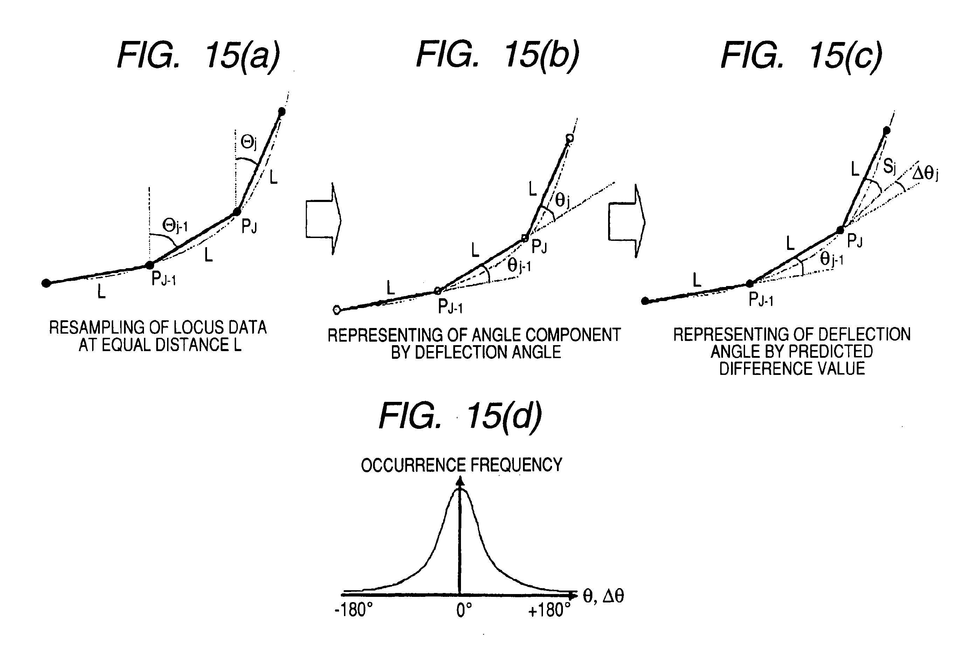

(1) Conversion of position data to a single variable FIG. 15 (a) represents sampling points in a road zone set in equal-distance resample as PJ-1 and PJ. This sampling point (PJ) is uniquely determined by two dimensions of distance (resample length) L from the adjacent sampling point (PJ-1) and angle Θ. Assuming that the distance is constant (L), the sampling point (PJ) can be represented by the single variable of only the angle component Θ from the adjacent sampling point (PJ-1). In FIG. 15 (a), as the angle Θ, the angle Θ based on "absolute azimuth" with the due north azimuth (upper part of the drawing) as 0 degrees and the magnitude specified clockwise in the range of 0 to 360 degrees is shown (absolute azimuth from the due north). The road zone can be represented by the data string of the angle components of the sampling points by indicating the constant distance L between the sampling points and the latitude and longitude of the sampling point as the start or the termination (reference point) separately.

(2) Conversion of a single variable value to a value having a statistical bias
As shown in FIG. 15 (b), the angle component of each sampling point is represented by the displacement difference from the angle component of the adjacent sampling point, namely, "deflection angle" $\theta_j$ so that the single variable values of the sampling point become statistically biased values suited for variable-length coding. The deflection angle $\theta_j$ is calculated as

$$\theta_j = \Theta_j - \Theta_{j-1}$$

If the road is linear, the deflection angles θ of the sampling points concentrate on the vicinity of 0 and become data having a statistical bias.

The angle component of the sampling point can be converted into data having a statistical bias by representing the deflection angle θj of an attention sampling point PJ by difference value (deflection angle predicted difference value or deflection angle predicted error) Δθj from deflection angle predicted value Sj (statistical predicted value) of the sampling point PJ predicted using deflection angles θj-1, θj-2, .. of the preceding sampling points PJ-1, PJ-2, .. as shown in FIG. 15 (c). The statistical predicted value Sj, for example, can be defined as

$$Sj = \theta j-1$$

or can be defined as

$$Sj = (\theta j-1 + \theta j-2)/2$$

The deflection angle predicted difference value Δθj is calculated as

$$\Delta\theta j = \theta j - Sj$$

If the road is curved at a constant curvature, the deflection angle predicted difference values Δθ of the sampling points concentrate on the vicinity of 0 and become data having a statistical bias.

FIG. 15 (d) is a graph to show the data occurrence frequency when a linear road zone is displayed as the deflection angle θ and a curvilinear road zone is displayed as the deflection angle predicted difference value Δθ. The maximum appears at θ (or Δθ) = 0° and the occurrence frequency of θ and Δθ has a statistical bias.

(3) Variable-length coding

Next, the data string values converted into values having a statistical bias are variable-length coded. Various types of variable-length coding method such as a fixed numeric value compression method (0 compression, etc.,), a Shannon-Fano code method, a Huffman code method, an arithmetic code method, and a dictionary method exist; any method may be used. To use the most general Huffman code method, using a code table where a code with a small number of bits is defined for highly frequently occurring data and a code with a large number of bits is defined for less frequently occurring data, the values in the data string provided with a statistical bias are coded for reducing the total data amount.

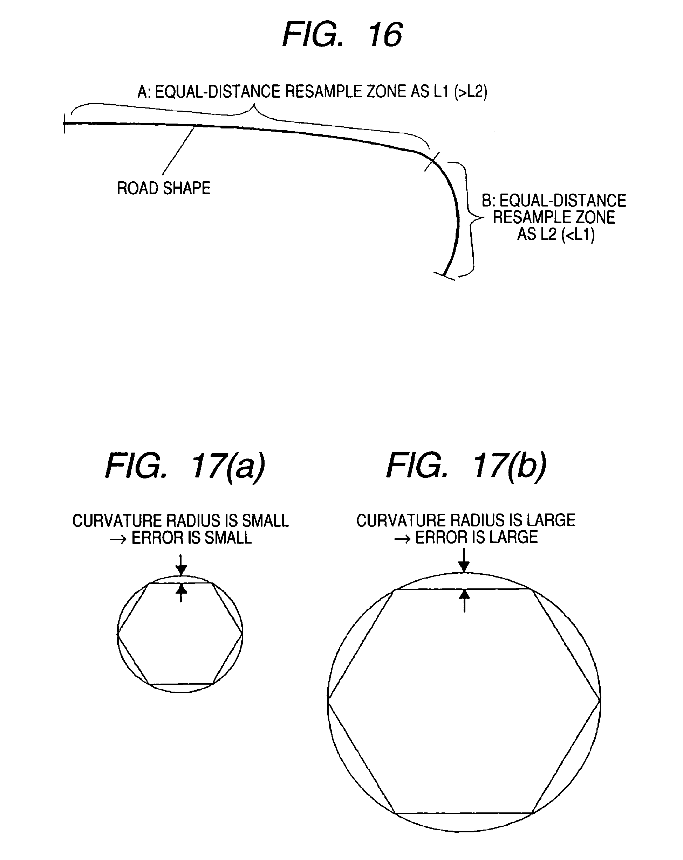

JP-A-2003-23357 mentioned above proposes a method of setting distance L2 of equal-distance resample short in a zone B where the curvature of the road shape is large and setting distance L1 of equal-distance resample long in a linear zone A with a small curvature, as shown in FIG. 16. The reason is that if a largely curved road with a large curvature is resampled at a long distance, it becomes impossible to place a sampling point at a position indicating the characteristic road shape, the reproducibility of the road shape at the reception party worsens, and the possibility that erroneous matching may occur becomes high.

As a specific method, a resample length determination method of presetting the value that can be taken by resample length Lj in each zone j (quantization resample length) to, for example, 40/80/160/320/640/1280/2560/5120 meters, finding Lj according to the following expression (expression 1) using curvature radius ρj of the zone j, and determining that the quantization resample length closest to the value is the resample length Lj:

$$Lj = \rho j \cdot Kr \quad (where\ Kr\ is\ a\ fixed\ parameter)$$

(Expression 1)

However, the resample length determination method using (Expression 1) is equal to finding the length of each side of a polygon approximate to a perfect circle as shown in FIG. 17 and the number of sides (corners) of a polygon approximate to a perfect circle is constant regardless of the magnitude of the curvature radius. Thus, when the curvature radius is small (the circle is small), the maximum error between the circle and the polygon is also small as shown in FIG. 17 (a); when the curvature radius is large, the maximum error between the circle and the polygon, namely, the maximum error between the original shape and the approximate shape concatenating the sampling points (resample shape) becomes large as shown in FIG. 17 (b). This is a problem.

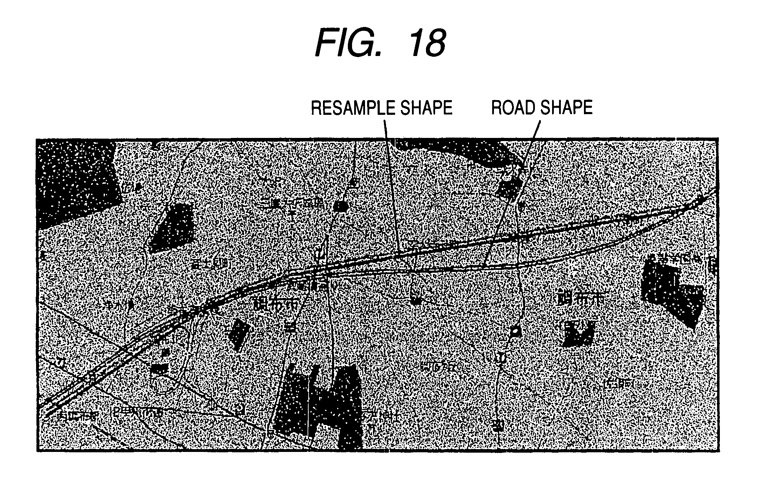

FIG. 18 shows the resample shape reproduced from coded data after the road shape is resampled according to the resample length determined by the method in the related art and the coded data is generated. It is seen that the follow-up ability of the reproduced resample shape is not good relative to the gentle express highway curve.

The follow-up ability of the resample shape can be improved by setting Kr in (Expression 1) small, in which case it is equivalent to increasing the number of the sides (corners) of a polygon approximate to a perfect circle, and a fine resample length more than necessary is set for the road shape with the small curvature radius, causing a problem of degradation of the compression rate of the coded data.

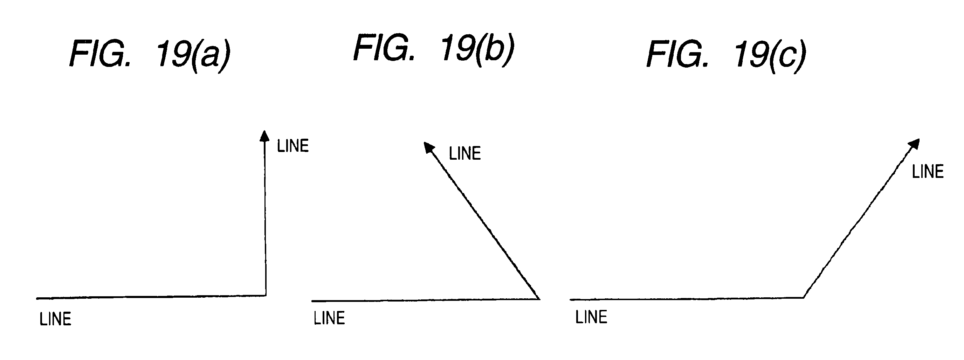

As shown in FIG. 19 (a), (b), (c), it is unreasonable to assume-that a corner where roads linearly cross (which will be hereinafter referred to as "V-shaped curve" regardless of the magnitude of the cross angle) is a part of a circular arc for calculating the curvature radius. Thus, the resample length determination method in the related art involves a problem of the incapability of setting the appropriate resample length for the original shape showing a V-shaped curve.

The invention is intended for solving the problems in the related arts and it is therefore an object of the invention to provide a determination method of a resample length capable of providing a resample shape with a small error relative to the original shape without incurring an increase in the data amount of coded data and provide a coded data generation method using the resample length determination method and an apparatus for carrying out the methods.

Patent document 1: JP-A-2003-23357

Disclosure of the Invention

In a resample length determination method of the invention, the resample length between sampling points to resample a linear object is set so that an error between the resample shape concatenating the sampling points as a line and the linear object does not exceed a predetermined allowable error.

Thus, the allowable error is predefined and the resample length is determined so as not to exceed the allowable error, so that the resample shape well follows the linear object.

To grasp the invention from another aspect of the invention, the invention is a determination method of a resample length between sampling points to resample a linear object, and this resample length determination method includes the following steps (1) to (4):

(1) A step of determining whether or not the shape of the linear object is approximate to a part of a circular arc under a predetermined condition.

(2) A step of calculating a curvature radius of the linear object if it is determined that the shape is approximate to a part of the circular arc as the result of the determining step.

(3) A step of setting the resample length so that an error between a resample shape concatenating the sampling points as a line and the linear object does not exceed a predetermined allowable error Emax if the curvature radius of the linear object, ρ, is equal to or greater than a predetermined value.

(4) A step of setting the resample length by making the linear object approximate to a polygon corresponding to the curvature radius ρ if the curvature radius of the linear object, p, is equal to or less than the predetermined value. In the resample length determination method of the invention, in (3) described above, the resample length can be determined based on the value of a determination expression containing

$$(\rho^2 - (\rho - \mathtt{Emax})^2).$$

This determination expression can be used to determine the resample length not exceeding the allowable error. In the resample length determination method of the invention, in (4) described above, the resample length can be determined based on a determination expression containing Kr·ρ using the curvature radius ρ and a fixed parameter Kr.

On the other hand, in (4) described above, Emax can be changed in response to ρ so that the smaller p, the smaller Emax.

In doing so, if the linear object shows a steep small curve, the resample shape is prevented from being distorted relative to the original shape.

In the resample length determination method of the invention, when the bend portion of the linear object is not assumed to be a part of a circular arc, the bend portion is made approximate to a part of a circle with the error from the bend portion not exceeding the allowable error and then the value of the determination expression is calculated and the resample length is determined based on the calculated value.

In doing so, the appropriate resample length can also be determined in a V-shaped curve part.

If it is determined that the shape of the linear object shape object contains a bend portion which is not approximate to a part of the circular arc, a predetermined resample length may be selected in response to the deflection angle magnitude in the portions preceding and following the bend portion.

The step of determining whether or not the shape of the linear object is approximate to a part of a circular arc may be executed using the deflection angle magnitude or the relationship between the deflection angle and the node-to-node distance.

In a coded data generation method of the invention, the resample length between sampling points to resample a linear object is determined by any of the methods described above, the linear object is resampled according to the determined resample length to set a plurality of sampling points, the position data of each sampling point is represented by an angle component having an occurrence frequency bias, and variable-length coding is performed for a data string of listing the position data of the sampling points in order to compress the data.

According to the method, the coded data representing the linear object with not so large data amount and a small error relative to the original shape can be provided.

The invention contains an apparatus including a resample length determination section for determining the resample length between sampling points to resample a linear object according to any of the methods described above.

A coded data generation apparatus of the invention includes a resample length determination section for determining the resample length between sampling points to resample a linear shape according to any of the methods described above; a resample processing section for resampling the linear shape according to the resample length determined by the resample length determination section to set a plurality of sampling points; and a variable-length coding processing section for representing position data of each sampling point set by the resample processing section by an angle component having an occurrence frequency bias, and performing variable-length coding for a data string of listing the position data of each sampling point in order to compress the data.

The apparatus can carry out the resample length determination method and the coded data generation method descried above.

The configuration described above can be applied to a probe car installed machine for reporting the run locus of a probe car.

Further, the invention also contains a program for causing a computer to determine the resample length between sampling points to resample a linear object. The program causes the computer to execute the above-described steps (1) to (4).

The invention also contains a coded data decoding apparatus including a reception section for receiving coded data provided using the coded data generation method of a linear object described above; and a reconstruction section for reconstructing the received coded data.

In the resample length determination method of the invention, the resample length for producing the resample shape with a small error relative to the original shape without incurring an increase in the data amount can be determined. The appropriate resample length can also be determined in a V-shaped curve part.

Brief Description of the Drawings

FIG. 1 is a drawing to describe an error between an attention road shape and a resample shape in a resample length determination method in a first embodiment of the invention.

FIG. 2 is a drawing to describe center line resample.

FIG. 3 is a flowchart to show a procedure of the resample length determination method in the first embodiment of the invention.

FIG. 4 is a drawing to show road link lengths and deflection angles.

FIG. 5 is a drawing to describe definition of curvature.

FIG. 6 is a drawing to represent the resample length determined by the resample length determination method in the first embodiment of the invention by the distance from the beginning of an object road.

FIG. 7 is a block diagram to show the configuration of an information transmission apparatus for carrying out the resample length determination method in the first embodiment of the invention.

FIG. 8 is a block diagram to show the configuration of a probe car installed machine for carrying out the resample length determination method in the first embodiment of the invention.

FIG. 9 is a drawing to describe a resample length determination method in a second embodiment of the invention.

FIG. 10 is a drawing to describe how to set a circle approximating a V-shaped curve in the resample length determination method in the second embodiment of the invention.

FIG. 11 is a flowchart to show a procedure of the resample length determination method in the second embodiment of the invention.

FIG. 12 is a flowchart to show a V-shaped curve determination procedure in the second embodiment of the invention.

FIG. 13 (a) is a drawing to show a link shape determined a V-shaped curve in the V-shaped curve determination procedure and FIG. 13 (b) is a drawing to show a link shape determined a non-V-shaped curve in the V-shaped curve determination procedure.

FIG. 14 is a drawing to show an application example of the resample length determination method when the original shape of a road on a digital map is approximate to a circular arc.

FIG. 15 is a drawing to describe a conversion method of a single variable value into a value having a statistical bias.

FIG. 16 is a drawing to show road zones with different sample lengths set.

FIG. 17 is a drawing to describe a problem of a resample length determination method in a related art.

FIG. 18 is a drawing to show alienation between a road shape and a resample shape.

FIG. 19 is a drawing to describe V-shaped curves to which the resample length determination method in the related art cannot be applied.

Best Mode for Carrying out the Invention

(First embodiment)

In a first embodiment of the invention, a resample length determination method when the original shape of a road on a digital map, a linear object, is approximate to a circular arc will be discussed. In other words, a resample length determination method when the original shape of a road is approximate to a part of a circular arc or can be assumed to be a part of a circular arc under a predetermined condition will be discussed.

In the resample length determination method, allowable error Emax between the approximate shape concatenating sampling points (resample shape) and the road shape is previously defined. When the curvature radius of the road shape is equal to or greater than a predetermined value (namely, if the method in the related art is adopted, it is feared that the error between the road shape and the resample shape may exceed the allowable error Emax), the resample length to be used is selected from among a plurality of preset quantization resample lengths so as not to exceed the allowable error Emax. When the curvature radius of the road shape is equal to or smaller than the predetermined value, the resample length is determined by a similar method to that in the related art.

The details of how to determine the allowable error Emax are described in JP-A-2002-328033. For example, Emax is set so as to satisfy the following conditions:

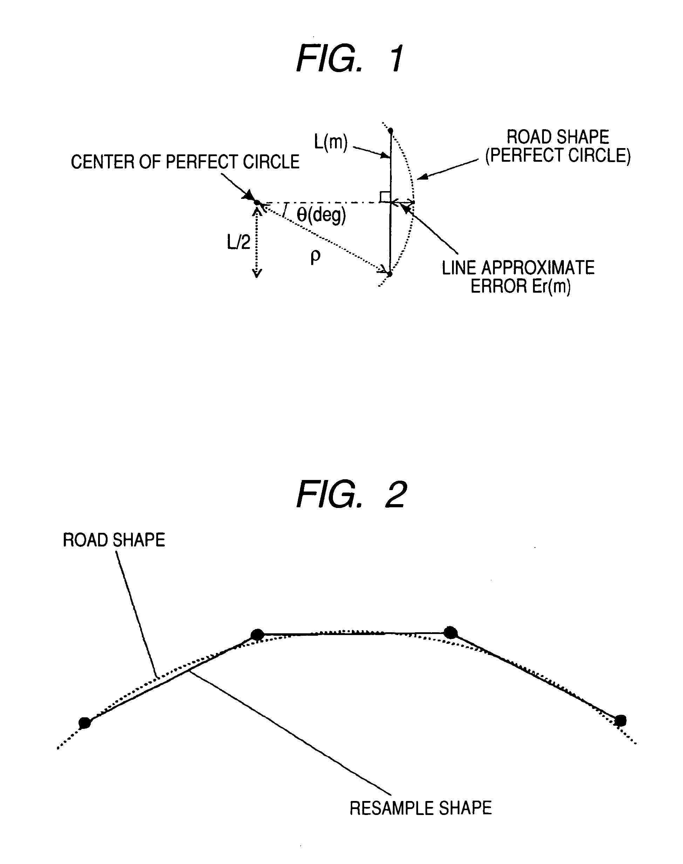

- The allowable error is set small in the vicinity of the start point or end point of the object road zone.
- The allowable error is set small if parallel running roads are adjacent.
- The allowable error is set small on the periphery of an intersection where a connection road with a shallow cross angle such as an interchange gateway exists. Now, the road shape is modeled to a perfect circuit with curvature radius $\rho$, as shown in FIG. 1. Maximum error (linear approximate error) Er between the resample shape and the road shape when sampling points are set on the perfect circle with the resample length set to L can be calculated according to the following expression (Expression 2):

$$\mathrm{Er} \; = \; \rho - \; (\rho^2 - (\mathrm{L}/2)^2) \qquad \qquad \text{(Expression 2)}$$

When (Expression 2) is expanded with respect to L,

$$\mathrm{L} \; = \; 2 \; (\rho^2 - (\rho - \mathrm{Er})^2) \qquad \qquad \text{(Expression 3)}$$

Thus, to prevent the error between the road shape and the resample shape from exceeding the allowable error Emax, the resample length L may satisfy the condition of the following expression (Expression 4):

$$\mathrm{L} \; \leq \; 2 \; (\rho^2 - (\rho - \mathrm{Emax})^2) \qquad \qquad \text{(Expression 4)}$$

where $\rho \geq$ Emax, Emax > 0
In the specification, the "error between the resample shape and the linear object" refers to Er in FIG. 1.

As shown in FIG. 2, to set the sampling points with a shift from the top of the perfect circle and resample so that the lines of the perfect circle are distributed on the left and right of the line concatenating the sampling points to the same degree (called "center line resample"), the error components between the resample shape and the road shape ideally spread out evenly to the left and right of the resample shape and thus in the center line resample, the resample length L may satisfy the condition of the following expression (Expression 5):

$$L \leq 2 \times 2 (\rho^2 - (\rho - Emax)^2) \qquad (Expression\ 5)$$

where $\rho \geq$ Emax, Emax > 0
However, since the circular arc of the actual road shape differs from the perfect circle, resample zone length determination value L0 when $\rho$ is equal to or greater than a predetermined value (roughly, two to five times Emax) is set as in the following expression (Expression 6) allowing for the safety factor:

$$L0 = \alpha \times 2 (\rho^2 - (\rho - Emax)^2) \qquad (Expression\ 6)$$

where $\alpha$ = 1.2 to 1. 8 when center line resample is performed
$\alpha$ = 0.6 to 0.9 when center line resample is not performed
Quantization resample length Ln is determined based on L0 calculated according to (Expression 6). It can be the that the resample length determination method described above is executed based on a determination expression containing $(\rho^2 - (\rho - Emax)^2)$.

When $\rho$ is equal to or smaller than the predetermined value, if L0 is determined according to the expression described above, distortion or alienation degree from the original shape increases. Therefore, in this case, the resample zone length determination value L0 is set as in the following expression (Expression 7). The resample length is set as the shape is approximated with a polygon corresponding to the curvature radius.

$$L0 = Kr \cdot \rho \qquad (Expression\ 7)$$

where Kr is a fixed parameter.
The quantization resample length Ln is determined based on L0 calculated according to (Expression 7). It can be the that the resample length determination method described above is executed based on a determination expression containing Kr·$\rho$.

As the quantization resample length Ln is determined based on the resample zone length determination values L0, if the road shape shows a gentle large curve, the resample shape is prevented from largely deviating from the road shape and if the road shape shows a steep small curve, the resample shape is prevented from being distorted relative to the road shape.

Therefore, the reception party can decode reception data and precisely reproduce the resample shape.
Instead of setting the resample zone length determination value (Expression 7) when the curvature radius of the road shape, $\rho$, is equal to or smaller than the predetermined value, allowable error (Eo) may be set as a function of the curvature radius $\rho$ (when $\rho$ is small, Eo also becomes small) and the quantization resample length Ln may be determined using the resample zone length determination value in (Expression 6) regardless of the magnitude of $\rho$.

In this case, the allowable error (Eo) is set as in the following expression (Expression 8, 9), for example:

$$Eo = Emax \qquad (Expression\ 8)$$

where when $\rho$ is equal to or greater than a predetermined value (for example, $\gamma \cdot \rho \geq Emax$)

$$Eo = \gamma \cdot \rho \qquad \text{(Expression 9)}$$

where $\gamma$ is a constant of 1 or less (mostly, 0.2 to 0.5). (Expression 9) may be any other expression if Eo is a monotonic increasing function of $\rho$. In the mode, the allowable error Emax is changed in response to the curvature radius $\rho$ so that the smaller the curvature radius $\rho$, the smaller the allowable error Emax.

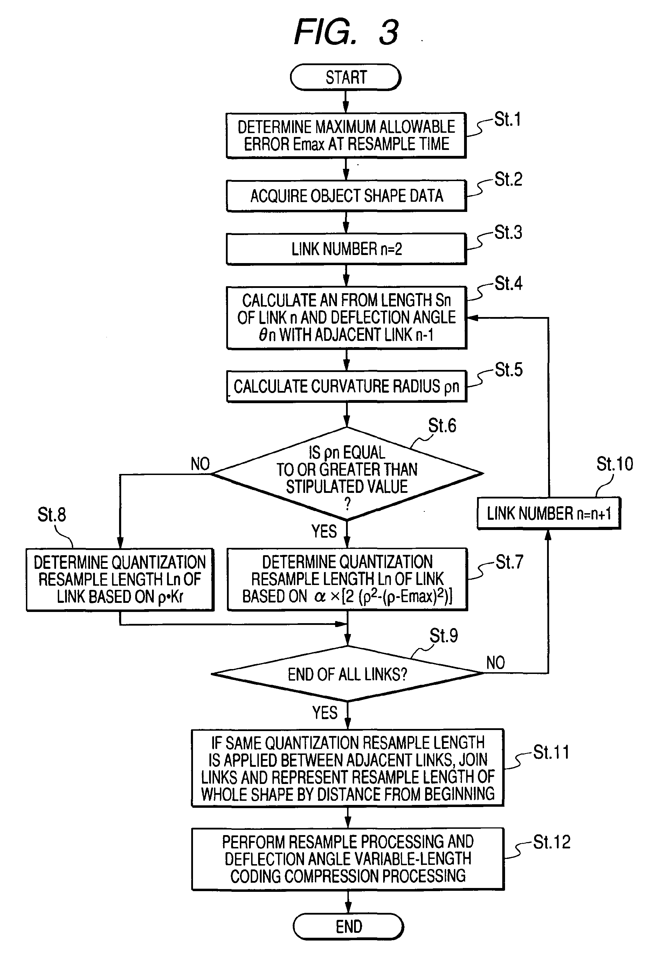

FIG. 3 shows a procedure of setting the actual resample length using the resample zone length determination values L0 in (Expression 6) and (Expression 7).

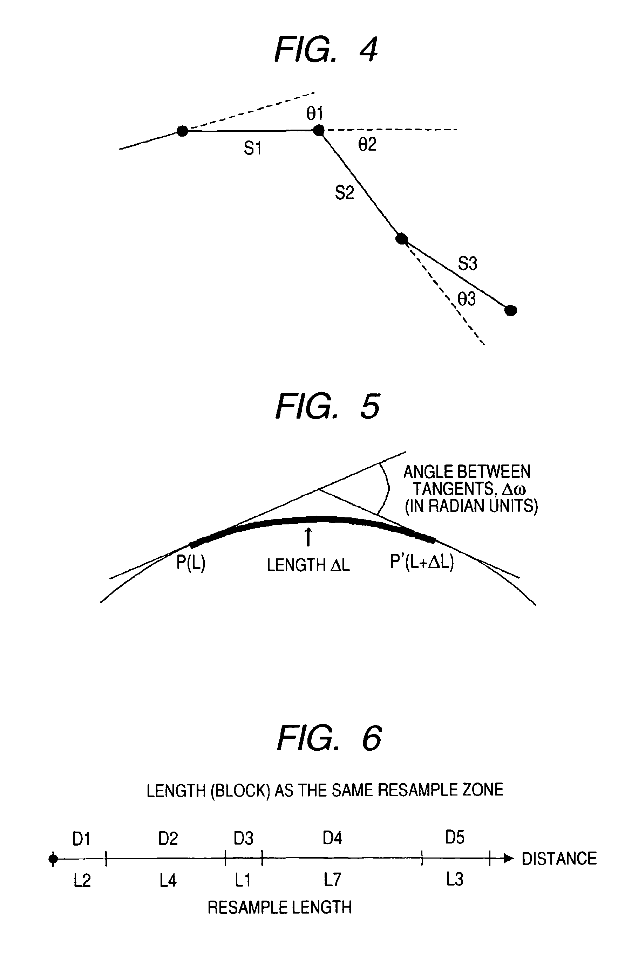

First, the maximum allowable error Emax between the road shape and the resample shape is determined (step 1). Next, the road shape data of the object road is acquired from a digital map database (step 2). The road shape data contains node and link data as shown in FIG. 4. Focusing attention on links in order starting at link n with n=2 (step 3), length Sn of the link n and deflection angle $\theta n$ with adjacent link (n-1) are used to calculate curvature an according to the following expression (Expression 10) (step 4):

$$an \quad \theta n / Sn \qquad \text{(Expression 10)}$$

The curvature in a two-dimensional curve is defined as limit value $d\omega/dL$ of $\Delta L \to 0$ of $\Delta\omega/\Delta L$ where $\Delta\omega$ is the angle between tangents at two points P(L) and P(L+$\Delta L$) at a distance of $\Delta L$ from each other on the curve as shown in FIG. 5, and its reciprocal $\rho n$ is defined as the curvature radius at point P. In (Expression 10), $\Delta L$ is approximated using the line Sn which is not the limit value and further $\Delta\omega$ is approximated using $\theta n$. Here, the purpose is to calculate the resample zone length determination value and strictness is not required and therefore there is no practical hindrance if the approximate value of the curvature is calculated according to (Expression 10).

Next, the curvature radius $\rho n$ is calculated according to the following expression (Expression 11) (step 5):

$$\rho n \quad 1 / an \qquad \text{(Expression 11)}$$

Whether or not the curvature radius $\rho n$ is equal to or greater than a stipulated value is determined (step 6). When the curvature radius $\rho n$ is equal to or greater than the stipulated value, quantization resample length Ln of the link n is determined based on the resample zone length determination value calculated using (Expression 6) (step 7). When the curvature radius $\rho n$ is smaller than the stipulated value, quantization resample length Ln of the link n is determined based on the resample zone length determination value calculated using (Expression 7) (step 8).

At step 8, the quantization resample length Ln of the link n may be determined based on the resample zone length determination value L0 calculated from $L0 = \alpha \times 2 \, (\rho^2-(\rho-Eo)^2)$ where $Eo = \gamma \cdot \rho$ (or Eo is an appropriate monotonic increasing function of $\rho$).

Focusing attention on the next line (step 10), step 4 and the later steps are repeated. When processing for all links of the object road is complete (step 9), if the same quantization resample length is applied between the adjacent links, the links are joined and the resample length of the whole object road (L2, L4, ..., L3) is represented by the distance from the beginning (step 11) as shown in FIG. 6. Next, using the resample length, resample processing is performed for the object road, the position information of each sampling point is represented by the deflection angle or deflection angle predicted difference value, and variable-length coding is performed to compress the data (step 12).

Such processing is performed, whereby the coded data representing the road positions well approximate to the original shape of the road with small data amount can be provided.

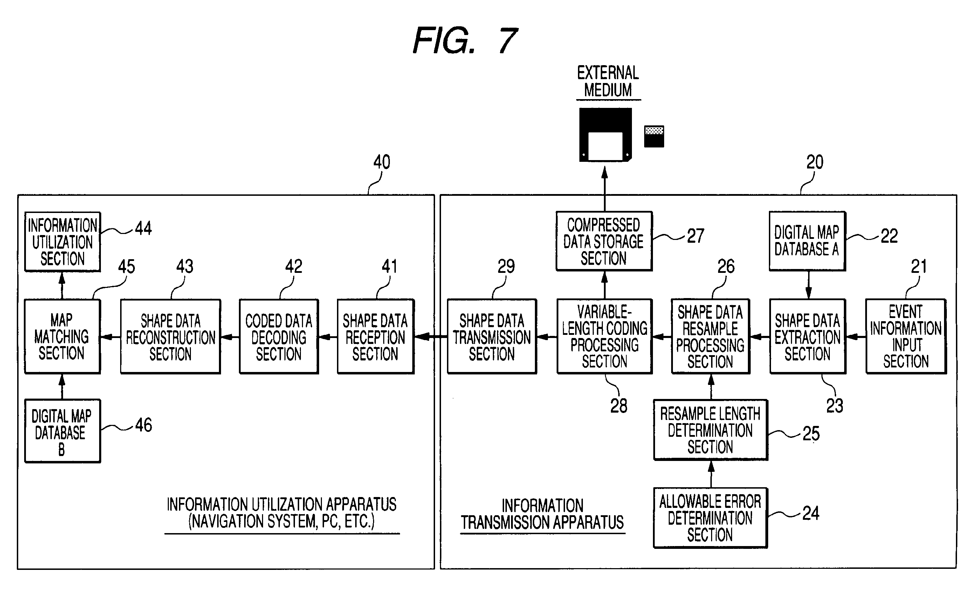

FIG. 7 shows the configurations of an information transmission apparatus (coded data generation apparatus) 20 for executing the resample length determination method to report the vehicle information object road and an information utilization apparatus (coded data reconstruction apparatus) 40 such as a vehicle-installed navigation system or a personal computer to make the most of the provided vehicle information. The information transmission apparatus 20 includes an event information input section 21 to which congestion information and traffic accident information are input, a shape data extraction section 23 for extracting the road shape data in the object road zone of vehicle information from a digital map database A 22, an allowable error determination section 24 for determining the allowable error between the resample shape and the original shape data, a resample length determination section 25 for determining the resample length L based on the allowable error, a shape data resample processing section 26 for resampling the road shape data extracted in the shape data extraction section 23 and generating a position data string of sampling points, a variable-length coding processing section 28 for compressing and coding the data generated by the shape data resample processing section 26, a compressed data storage section 27 for storing the compressed and coded road shape data and providing the stored data for an external medium, and a shape data transmission section 29 for transmitting the compressed and coded road shape data.

On the other hand, the information utilization apparatus 40 includes a shape data reception section 41 for receiving the provided road shape data, a coded data decoding section 42 for decoding the compressed and coded data, a shape data reconstruction section 43 for reconstructing the resample shape, a map matching section 45 for performing map matching using data in a digital map database B 46 and determining a road zone represented by sampling points on a digital map, and an information utilization section 44 for making the most of the provided vehicle information.

In the information transmission apparatus 20, the resample length determination section 25 determines the resample length L in resample based on the allowable error. The shape data resample processing section 26 resamples the road shape data of the object road extracted by the shape data extraction section 23 using the determined resample length L.

The variable-length coding processing section 28 variable-length codes the road shape data. The road shape data compressed by variable-length coding is recorded on an external medium and is provided, or is transmitted from the shape data transmission section 29.

In the information utilization apparatus 40 receiving the road shape data, the coded data decoding section 42 decodes the compressed and coded data, and the shape data reconstruction section 43 reconstructs the position information of the sampling points to reproduce the resample shape concatenating the sampling points. The resample shape is superposed on the digital map for display on a screen of the information utilization apparatus 40.

To accurately determine the reported road zone, the map matching section 45 performs map matching between the position data of the sampling point and the map data in the digital map database B 46 and determines the object road on the map data in the digital map database B 46.

The information utilization section 44 displays the provided vehicle information on the screen and uses the vehicle information for a route search to make the most of the vehicle information. The information utilization apparatus 40 can also implement a car navigation receiver or a map display terminal.

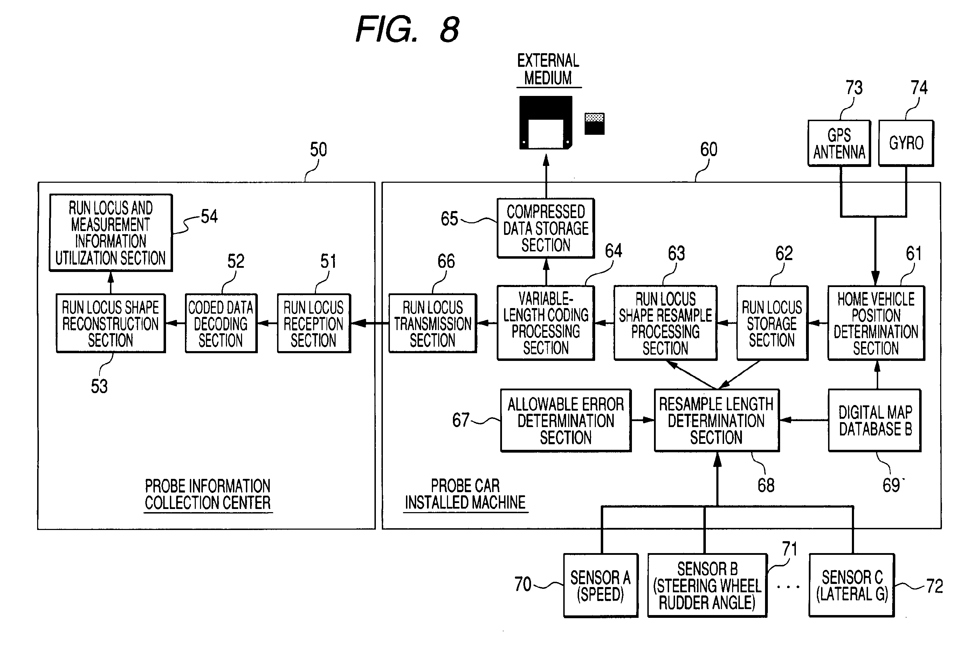

FIG. 8 shows the configurations of a probe car installed machine (coded data generation apparatus) 60 for executing the resample length determination method to report the run locus and a probe information collection center (coded data reconstruction apparatus) 50 for collecting probe information. The probe car installed machine 60 includes a home vehicle position determination section 61 for determining the home vehicle position based on information received from a GPS antenna 73 and detection information of a gyro 74, a speed detection sensor 70, a sensor 71 for detecting a steering wheel rudder angle, a sensor 72 for detecting lateral acceleration (lateral G), a digital map database 69, an allowable error determination section 67 for determining the allowable error between the resample shape and the road shape, a resample length determination section 68 for determining the resample length L used for resampling, a run locus storage section 62 for storing the run locus of the home vehicle, a run locus shape resample processing section 63 for resampling the run locus and generating a position data string of sampling points, a variable-length coding processing section 64 for compressing and coding the data generated by the run locus shape resample processing section 63, a compressed data storage section 65 for storing the compressed and coded run locus shape data, and a run locus transmission section 66 for transmitting the compressed and coded run locus shape data.

On the other hand, the probe information collection center 50 includes a run locus reception section 51 for receiving the run locus shape data provided by the probe car installed machine 60, a coded data decoding section 52 for decoding the compressed and coded reception data, a run locus shape reconstruction section 53 for reconstructing the run locus shape from the provided data, and a run locus and measurement information utilization section 54 for making the most of the run locus and measurement information collected from the probe car installed machine 60 to generate vehicle information.

The home vehicle position detected in the home vehicle position determination section 61 is stored in the run locus storage section 62 of the probe car installed machine 60 in sequence as the run locus. The resample length determination section 68 determines the magnitude of the curvature of the run locus from the information of the speed, the steering wheel rudder angle, and the lateral G detected by the sensors 70, 71, and 72 and the road shape acquired from the digital map database 69, and determines the resample length L used for resampling based on the magnitude of the curvature and the allowable error determined by the allowable error determination section 67.

The run locus shape resample processing section 63 reads the run locus data stored in the run locus storage section 62 at the probe information transmission timing and resamples the run locus shape using the resample length determined by the prediction expression determination section 68.

The variable-length coding processing section 64 variable-length codes the data. The compressed and coded data is transmitted to the probe information collection center 50. The data may be stored on an external medium so as to be provided for the probe information collection center 50.

In the probe information collection center 50, the coded data decoding section 52 decodes the data collected from the probe car installed machine 60, and the run locus shape reconstruction section 53 reconstructs the position information of the sampling points to reproduce the resample shape of the run locus. The most of the run locus information is made to generate vehicle information together with the measurement information of the speed, etc., measured in the probe car installed machine 60.

Thus, the information transmission apparatus and the probe car installed machine code the object road and the run locus using the resample length determination method of the invention, whereby the information utilization apparatus and the probe information collection center receiving the coded data can decode the reception data and precisely reproduce the resample shape.

(Second embodiment)
In a second embodiment of the invention, a resample length determination method in a V-shaped curve as an example wherein the road shape cannot be assumed to be a part of a circular arc will be discussed.

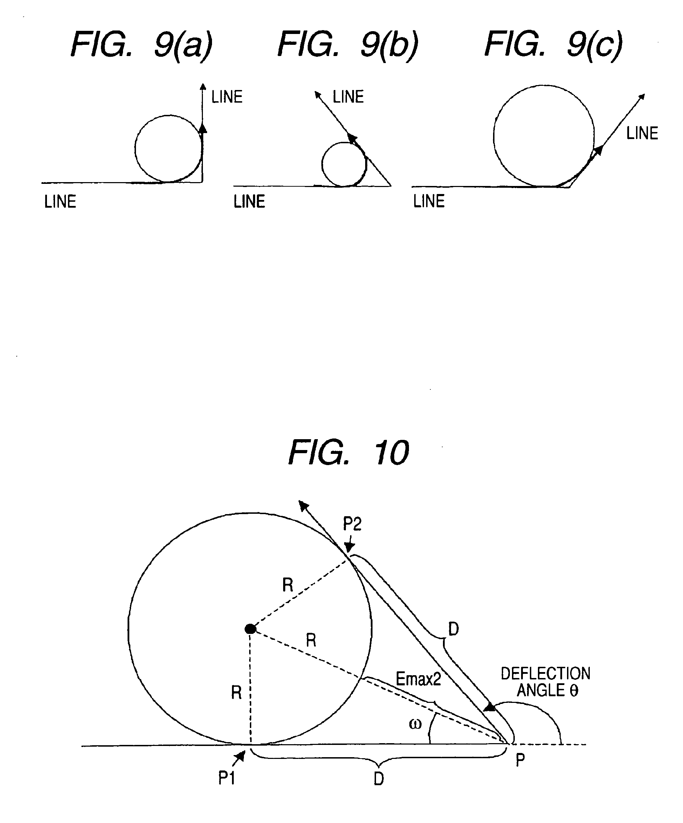

In the V-shaped curve, the V-shaped curve portion is approximated by a circle tangent to the V-shaped curve portion for resampling, as shown in FIG. 9. The size of the circle is set so that the maximum error between the V-shaped curve and the circle does not exceed preset allowable error Emax2 as shown in FIG. 10.

Letting the radius of the circle be R and the distance from contact point P1, P2 between the circle and the V-shaped curve to intersection point P of the V-shaped curve be D, the relation

$$\omega = (180 - \theta)/2$$

$$(R + Emax2)^2 = D^2 + R^2$$

$$D \cdot \tan\omega = R$$

holds and therefore, from the expressions, D can be calculated as (Expression 12) and R can be calculated as (Expression 13) :

$$D = Emax2 \cdot [\tan\omega + \sqrt{(\tan\omega)^2 + 1}] \quad \text{(Expression 12)}$$

$$R = D/\tan\omega$$

$$= Emax2 \cdot [1 + (\sqrt{(\tan\omega)^2 + 1})/\tan\omega] \quad \text{(Expression}$$

To resample the V-shaped curve, nodes P1 and P2 are added onto a line at the distance of D from the point P and P1->P->P2 is assumed to be a circle with the curvature radius R, and the V-shaped curve is resampled according to the resample length L determined by R.

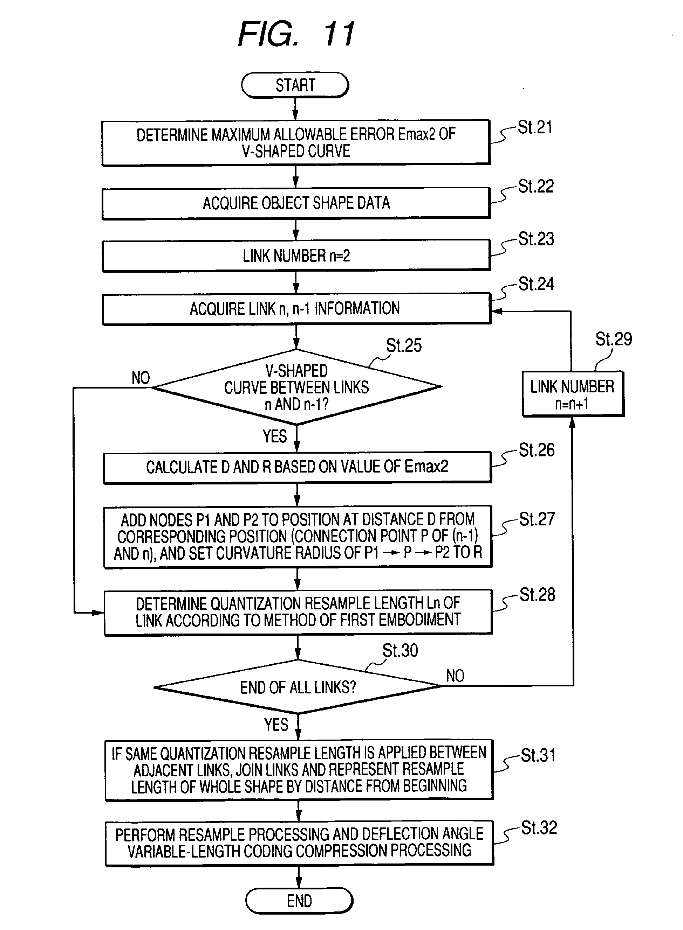

A flowchart of FIG. 11 shows a resample processing procedure in a V-shaped curve.
First, the maximum allowable error Emax2 of the V-shaped curve is determined (step 21). Next, the road shape data of the object road is acquired from a digital map database (step 22). Focusing attention on links in order starting at link n with n=2 (step 23), information of the link n and adjacent link (n-1) is acquired (step 24) and whether or not the link n and the adjacent link (n-1) form a V-shaped curve is determined (step 25).

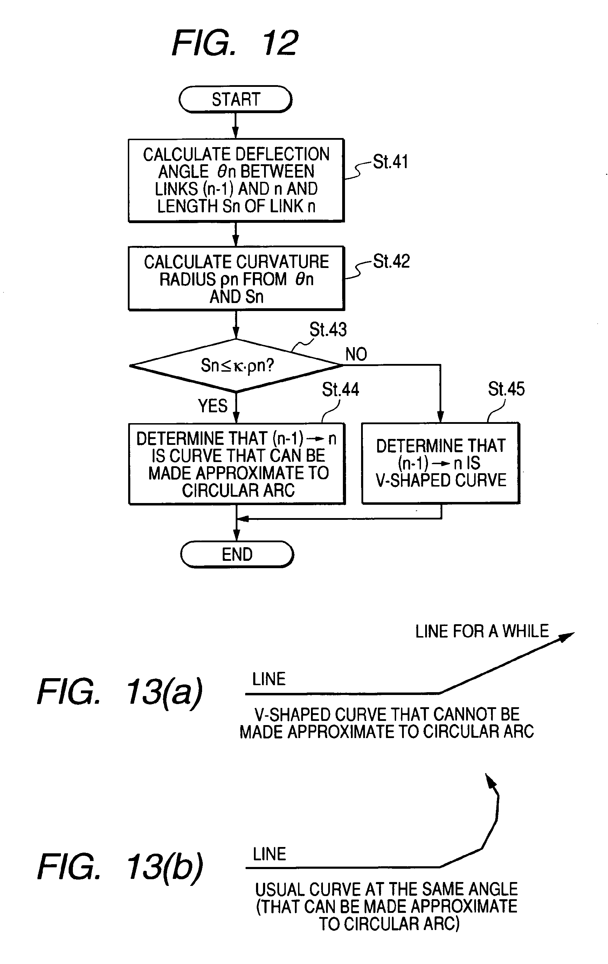

This determination is made according to a procedure shown in FIG. 12. That is, deflection angle $\theta n$ between the link (n-1) and the link n and length Sn of the link n are calculated (step 41) and $\theta n$ and Sn are used to calculate

curvature radius ρn according to (Expression 10) (Expression 11) (step 42).

Next, using constant k, whether or not conditional expression of Sn≤k·ρn is satisfied is determined (step 43). When Sn is long, the conditional expression is not satisfied as shown in FIG. 13 (a). In this case, it is determined that link (n-1) -> link n is a V-shaped curve that cannot be made approximate to a circular arc (step 45). When Sn is short, the conditional expression is satisfied as shown in FIG. 13 (b). In this case, it is determined that link (n-1) -> link n is a usual V-shaped curve that can be made approximate to a circular arc (step 44). When k=1, if Sn is approximate to the circular arc of the curvature radius ρn with the number of corners of a regular hexagon or more, the conditional expression is satisfied.

If link (n-1) -> link n is a V-shaped curve, D and R are calculated using (Expression 12) (Expression 13) based on the value of Emax2 (step 27), nodes P1 and P2 are added onto the link at the distance of D from the connection point P of the link (n-1) and the link n, and the curvature radius of P1->P->P2 is set to R (step 27).

Quantization resample length Ln is determined using the resample length determination method described in the first embodiment (step 28). If link (n-1) -> link n is not a V-shaped curve at step 25, immediately step 28 is executed.

Such processing is performed for all links. When processing for all links is complete, if the same quantization resample length is applied between the adjacent links, the links are joined and the resample length of the whole object road is represented by the distance from the beginning (step 31) and resample processing and variable-length coding processing are performed for the object road (step 32), as in the first embodiment.

Such processing is performed, whereby the appropriate resample length can also be set for the V-shaped curve. If the road shape contains a bend portion not approximate to a part of a circular arc such as a V-shaped curve, the portions preceding and following the bend portion may be preset so as to preselect the resample length in response to the magnitude of the deflection angle. For example, the resample length may be preset in response to the deflection angle in such a manner that if the deflection angle is equal to or greater than 26 degrees and smaller than 40 degrees, the resample length is 50 m, that if the deflection angle is equal to or greater than 40 degrees and smaller than 60 degrees, the resample length is 30 m, and that if the deflection angle is equal to or greater than 60 degrees, the resample length is 15 m. If the deflection angle is smaller than 26 degrees, the resample length determination method described in the first embodiment is used.

To determine whether or not the road shape is approximate to a part of a circular arc, the magnitude of the deflection angle for each node preset in the road or the relationship between the magnitude of the deflection angle and the node-to-node distance can be used.

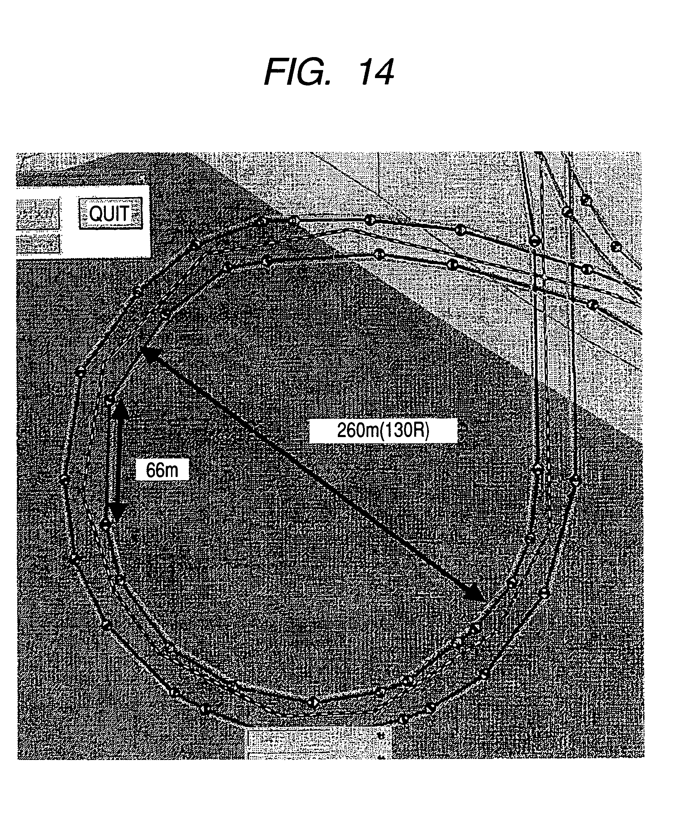

FIG. 14 is a drawing to show a state in which when the original shape of the road on the digital map is approximate to a circular arc, nodes are set on the road on the original digital map.

Whether or not the road shape is assumed to be a circular arc can be determined by the magnitude of the deflection angle and the node-to-node distance, as described above.

The curvature radius ρ is calculated from the deflection angle θ and the node-to-node distance L and if $L < 2(\rho^2 - (\rho-E)^2)$, it can be determined that the original object road was a smooth curve rather than an intersection or a V-shaped curve. Here, digitalization input error ±5 m or so (standard error when the original map is digitalized) is entered in E.

The inner circle in FIG. 14 has a curvature radius of 130 m and the length of the line (node-to-node distance) seeming to be the longest is 66 m. Assuming that map data digitalization input error E = 5 m, $2(\rho^2-(\rho-E)^2) = 71$ m.

Since any other node-to-node distance is smaller than that node-to-node distance, it can be the that the calculation method is almost correct.

Rough determination can also be made only using the deflection angle with the calculation skipped, because the deflection angle is small if the place is such a place where a gentle curve is digitalized.

In FIG. 8, a probe car system is constructed using the probe car installed machine 60 and the probe information collection center 50 in combination, and an information transmission method in the probe car system is accomplished between them; this method is accomplished using the resample length determination method, the coded data generation method, and the coded data decoding method of the invention in combination.

Further, the invention also contains a program for causing a computer to determine the resample length between sampling points to resample a linear object. The program causes the computer to execute the steps of determining whether or not the shape of the linear object is approximate to a part of a circular arc under a predetermined condition; calculating a curvature radius of the linear object if it is determined that the shape is approximate to a part of the circular arc as the result of the determining step; setting the resample length so that an error between a resample shape concatenating the sampling points as a line and the linear object does not exceed a predetermined allowable error if the curvature radius of the linear object is equal to or greater than a predetermined value; and making the linear object approximate to a polygon corresponding to the curvature radius if the curvature radius of the linear object is equal to or less than the predetermined value.

Such a program is incorporated in the information transmission apparatus 20 and the probe car installed machine 60 in various formats. For example, the program can be recorded in predetermined memory in the information transmission apparatus 20, the probe car installed machine 60 or an external apparatus. The program may be recorded in an information record unit such as a hard disk and an information record medium such as a CD-ROM, a DVD-ROM, or a memory card. The program may be downloaded via a network.

The information transmission apparatus 20 and the information utilization apparatus 40 of the invention or the probe car installed machine 60 and the probe information collection center 50 are used in combination to make up a map data distribution system. The information transmission apparatus 20 and the probe car installed machine 60 function as an encoder from the viewpoint of generating coded data, and the information utilization apparatus 40 and the probe information collection center 50 function as a decoder from the viewpoint of reconstructing coded data.

The information transmission apparatus 20 or the probe car installed machine 60 of the coded data generation apparatus is an embodiment in the information transmission party and may be any if it is an apparatus or terminal that can transmit information. Further, the generated coded data can also be recorded on a medium so as to be provided for any other apparatus. The information utilization apparatus 40 or the probe information collection center 50 of coded data reconstruction apparatus is also an embodiment in the information reception party and may be any apparatus if the apparatus can make the most of information, such as a person computer or a mobile terminal. Of course, similar advantages can also be provided in the information collection center or the apparatus in the center that can reconstruct the coded data. Further, similar advantages can also be provided by performing reconstruction processing using a medium, etc., recording the coded data, needless to say.

The algorithm (program) complying with the coded data generation method of the invention can be recorded on a record medium recording the map data corresponding to various pieces of map information in the map data main body. Accordingly, it is made possible to compress and code the map data main body.

In the description of the embodiments, the linear object is the road shape for position reference by way of example. However, the linear object is not limited to the road shape. The "linear object" contains all elongated shapes including various forms of a line, a curve, etc., and can contain all geographic information that can be represented by linear shapes on a map. Further, it also contains all represented by linear shapes, not relating to a map, such as fingerprints.

While the invention has been described in detail with reference to the specific embodiments, it will be obvious to those skilled in the art that various changes and modifications can be made without departing from the spirit and the scope of the invention.

The present application is based on Japanese Patent Application (No. 2003-360631) filed on October 21, 2003, which is incorporated herein by reference.

Industrial Applicability

The resample length determination method and the coded data generation method of the invention can be used when coded data representing position information of road shapes, rivers, railways, administrative district boundaries, contour lines, etc., of a digital map is generated, stored, retained, etc. In addition to the digital map, the coded data generation method can also be applied when coded data representing linear objects of various patterns, fingerprints, etc., is generated, stored, retained, etc. The apparatus of the invention can be applied to various types of apparatus for generating, storing, and retaining of the coded data.

**Claims**

1. A resample length determination method of setting a resample length between sampling points to resample a linear object so that an error between a resample shape concatenating the sampling points as a line and the linear object does not exceed a predetermined allowable error.

2. A determination method of a resample length between sampling points to resample a linear object, said resample length determination method comprising the steps of:

   determining whether or not the shape of the linear object is approximate to a part of a circular arc under a predetermined condition;
   calculating a curvature radius of the linear object if it is determined that the shape is approximate to a part of the circular arc as the result of said determining step;
   setting the resample length so that an error between a resample shape concatenating the sampling points as a line and the linear object does not exceed a predetermined allowable error if the curvature radius of the linear object is equal to or greater than a predetermined value; and
   setting the resample length by making the linear object approximate to a polygon corresponding to the curvature radius if the curvature radius of the linear object is equal to or less than the predetermined value.

3. The resample length determination method as claimed in claim 1 or 2 wherein
in said step of setting the resample length so that an error between a resample shape concatenating the sampling points as a line and the linear object does not exceed a predetermined allowable error if the curvature radius of the linear object is equal to or greater than a predetermined value, the resample length is determined based on the value of a determination expression containing

$$(\rho^2 - (\rho - \mathtt{Emax})^2)$$

where $\rho$ is the curvature radius of the linear object and Emax is the allowable error.

4. The resample length determination method as claimed in claim 2 wherein
in said step of setting the resample length by making the linear object approximate to a polygon corresponding to the curvature radius if the curvature radius of the linear object is equal to or less than the predetermined value, the resample length is determined based on a determination expression containing $Kr \cdot \rho$ using the curvature radius of the linear object, $\rho$, and a fixed parameter $Kr$.

5. The resample length determination method as claimed in claim 2 wherein
in said step of setting the resample length by making the linear object approximate to a polygon corresponding to the curvature radius if the curvature radius of the linear object is equal to or less than the predetermined value, the allowable error is changed in response to the curvature radius so that the smaller the curvature radius, the smaller the allowable error.

6. A determination method of a resample length between sampling points to resample a linear object, said resample length determination method further comprising the steps of:

determining whether or not the shape of the linear object is approximate to a part of a circular arc under a predetermined condition;
if it is determined that the shape of the linear object shape object contains a bend portion which is not approximate to a part of the circular arc as the result of said determining step, making the bend portion approximate to a part of a circle with an error from the bend portion not exceeding an allowable error; and
calculating the value of the determination expression and determining the resample length based on the calculated value.

7. A determination method of a resample length between sampling points to resample a linear object, said resample length determination method comprising the steps of:

determining whether or not the shape of the linear object is approximate to a part of a circular arc under a predetermined condition; and
if it is determined that the shape of the linear object shape object contains a bend portion which is not approximate to a part of the circular arc as the result of said determining step, selecting a predetermined resample length in response to the deflection angle magnitude in the portions preceding and following the bend portion.

8. The resample length determination method as claimed in any one of claims 2 to 7 wherein
said step of determining whether or not the shape of the linear object is approximate to a part of a circular arc is executed using the deflection angle magnitude or the relationship between the deflection angle and the node-to-node distance.

9. A coded data generation method of a linear object, comprising the steps of:

determining a resample length of the linear object by a method as claimed in any of claims 1 to 8;
resampling the linear object according to the determined resample length to set a plurality of sampling points;
representing position data of each sampling point by an angle component having an occurrence frequency bias; and
performing variable-length coding for a data string of listing the position data represented by the angle component in order.

10. An apparatus comprising a resample length determination section for determining a resample length between sampling points to resample a linear object using a resample length determination method as claimed in any one of claims 1 to 8.

11. A coded data generation apparatus comprising:

a resample length determination section for determining a resample length between sampling points to resample a linear object according to a resample length determination method as claimed in any one of claims 1 to 8;
a resample processing section for resampling the linear object according to the resample length determined by said resample length determination section to set a plurality of sampling points; and
a variable-length coding processing section for representing position data of each sampling point set by said resample processing section by an angle component having an occurrence frequency bias, and performing variable-length coding for a data string of listing the position data of each sampling point in order to compress the data.

12. A probe car installed machine for reporting a run locus of a probe car, said probe car installed machine comprising:

a resample length determination section for determining a resample length between sampling points to resample a linear object according to a resample length determination method as claimed in any one of claims 1 to 8;
a resample processing section for resampling the linear object according to the resample length determined by said resample length determination section to set a plurality of sampling points; and
a variable-length coding processing section for representing position data of each sampling point set by said resample processing section by an angle component having an occurrence frequency bias, and performing variable-length coding for a data string of listing the position data of each sampling point in order to compress the data.

13. A program for causing a computer to determine a resample length between sampling points to resample a linear object, said program for causing the computer to execute the steps of:

determining whether or not the shape of the linear object is approximate to a part of a circular arc under a predetermined condition;
calculating a curvature radius of the linear object if it is determined that the shape is approximate to a part of the circular arc as the result of said determining step;
setting the resample length so that an error between a resample shape concatenating the sampling points as a line and the linear object does not exceed a predetermined allowable error if the curvature radius of the linear object is equal to or greater than a predetermined value; and
making the linear object approximate to a polygon corresponding to the curvature radius if the curvature radius of the linear object is equal to or less than the predetermined value.

14. A coded data decoding apparatus comprising:

a reception section for receiving coded data provided using a coded data generation method of a linear object as claimed in claim 9; and
a reconstruction section for reconstructing the received coded data.

14

# FIG. 1

CENTER OF PERFECT CIRCLE

L(m)

ROAD SHAPE
(PERFECT CIRCLE)

θ(deg)

L/2

ρ

LINE APPROXIMATE
ERROR Er(m)

# FIG. 2

ROAD SHAPE

RESAMPLE SHAPE

# FIG. 3

START

DETERMINE MAXIMUM ALLOWABLE ERROR Emax AT RESAMPLE TIME — St.1

ACQUIRE OBJECT SHAPE DATA — St.2

LINK NUMBER n=2 — St.3

CALCULATE AN FROM LENGTH Sn OF LINK n AND DEFLECTION ANGLE $\theta$n WITH ADJACENT LINK n-1 — St.4

CALCULATE CURVATURE RADIUS $\rho$n — St.5

IS $\rho$n EQUAL TO OR GREATER THAN STIPULATED VALUE ? — St.6

NO

YES

St.10 — LINK NUMBER n=n+1

St.8 — DETERMINE QUANTIZATION RESAMPLE LENGTH Ln OF LINK BASED ON $\rho \cdot Kr$

DETERMINE QUANTIZATION RESAMPLE LENGTH Ln OF LINK BASED ON $\alpha \times [2 \, (\rho^2 - (\rho - Emax)^2)]$ — St.7

END OF ALL LINKS? — St.9

NO

YES

IF SAME QUANTIZATION RESAMPLE LENGTH IS APPLIED BETWEEN ADJACENT LINKS, JOIN LINKS AND REPRESENT RESAMPLE LENGTH OF WHOLE SHAPE BY DISTANCE FROM BEGINNING — St.11

PERFORM RESAMPLE PROCESSING AND DEFLECTION ANGLE VARIABLE-LENGTH CODING COMPRESSION PROCESSING — St.12

END

# FIG. 4

$\theta 1$

S1  $\theta 2$

S2

S3

$\theta 3$

# FIG. 5

ANGLE BETWEEN
TANGENTS, $\Delta\omega$
(IN RADIAN UNITS)

P(L)  LENGTH $\Delta$L  P'(L+$\Delta$L)

# FIG. 6

LENGTH (BLOCK) AS THE SAME RESAMPLE ZONE

| D1 | D2 | D3 | D4 | D5 | |
|----|----|----|----|----|----|
| L2 | L4 | L1 | L7 | L3 | DISTANCE |

RESAMPLE LENGTH

*FIG. 7*

**INFORMATION TRANSMISSION APPARATUS** (20)

- 21 — EVENT INFORMATION INPUT SECTION
- 22 — DIGITAL MAP DATABASE A
- 23 — SHAPE DATA EXTRACTION SECTION
- 26 — SHAPE DATA RESAMPLE PROCESSING SECTION
- 25 — RESAMPLE LENGTH DETERMINATION SECTION
- 24 — ALLOWABLE ERROR DETERMINATION SECTION
- 28 — VARIABLE-LENGTH CODING PROCESSING SECTION
- 27 — COMPRESSED DATA STORAGE SECTION
- 29 — SHAPE DATA TRANSMISSION SECTION

EXTERNAL MEDIUM

**INFORMATION UTILIZATION APPARATUS (NAVIGATION SYSTEM, PC, ETC.)** (40)

- 41 — SHAPE DATA RECEPTION SECTION
- 42 — CODED DATA DECODING SECTION
- 43 — SHAPE DATA RECONSTRUCTION SECTION
- 45 — MAP MATCHING SECTION
- 46 — DIGITAL MAP DATABASE B
- 44 — INFORMATION UTILIZATION SECTION

# FIG. 8

## FIG. 9(a)    FIG. 9(b)    FIG. 9(c)

LINE

LINE

LINE

LINE

LINE

LINE

LINE

LINE

LINE

## FIG. 10

P2

R

R

D

R

Emax2

DEFLECTION
ANGLE θ

ω

P1

D

P

# FIG. 11

START

DETERMINE MAXIMUM ALLOWABLE ERROR Emax2 OF V-SHAPED CURVE — St.21

ACQUIRE OBJECT SHAPE DATA — St.22

LINK NUMBER n=2 — St.23

ACQUIRE LINK n, n-1 INFORMATION — St.24

St.25 — V-SHAPED CURVE BETWEEN LINKS n AND n-1?

NO

St.29 — LINK NUMBER n=n+1

YES

CALCULATE D AND R BASED ON VALUE OF Emax2 — St.26

ADD NODES P1 AND P2 TO POSITION AT DISTANCE D FROM CORRESPONDING POSITION (CONNECTION POINT P OF (n-1) AND n), AND SET CURVATURE RADIUS OF P1 → P → P2 TO R — St.27

DETERMINE QUANTIZATION RESAMPLE LENGTH Ln OF LINK ACCORDING TO METHOD OF FIRST EMBODIMENT — St.28

St.30 — END OF ALL LINKS?

NO

YES

IF SAME QUANTIZATION RESAMPLE LENGTH IS APPLIED BETWEEN ADJACENT LINKS, JOIN LINKS AND REPRESENT RESAMPLE LENGTH OF WHOLE SHAPE BY DISTANCE FROM BEGINNING — St.31

PERFORM RESAMPLE PROCESSING AND DEFLECTION ANGLE VARIABLE-LENGTH CODING COMPRESSION PROCESSING — St.32

END

## FIG. 12

```
        ( START )
            │
            ▼
┌──────────────────────┐
│ CALCULATE DEFLECTION │     St.41
│ ANGLE θn BETWEEN     │
│ LINKS (n-1) AND n AND│
│ LENGTH Sn OF LINK n  │
└──────────────────────┘
            │
            ▼
┌──────────────────────┐
│ CALCULATE CURVATURE  │     St.42
│ RADIUS ρn FROM θn    │
│ AND Sn               │
└──────────────────────┘
            │
            ▼              St.43
         ◇─────────────◇      NO
        ◇  Sn≤κ·ρn?    ◇──────────────┐
         ◇───────────◇               │
            │ YES                     │
            │            St.44        │  St.45
            ▼                         ▼
┌──────────────────────┐  ┌──────────────────┐
│ DETERMINE THAT (n-1)→n│  │ DETERMINE THAT   │
│ IS CURVE THAT CAN BE │  │ (n-1)→n IS       │
│ MADE APPROXIMATE TO  │  │ V-SHAPED CURVE   │
│ CIRCULAR ARC         │  │                  │
└──────────────────────┘  └──────────────────┘
            │                    │
            ◄────────────────────┘
            ▼
        ( END )
```

## FIG. 13(a)

LINE FOR A WHILE

LINE

V-SHAPED CURVE THAT CANNOT BE
MADE APPROXIMATE TO CIRCULAR ARC

## FIG. 13(b)

LINE

USUAL CURVE AT THE SAME ANGLE
(THAT CAN BE MADE APPROXIMATE
TO CIRCULAR ARC)

## FIG. 14

## FIG. 15(a)

RESAMPLING OF LOCUS DATA
AT EQUAL DISTANCE L

## FIG. 15(b)

REPRESENTING OF ANGLE COMPONENT
BY DEFLECTION ANGLE

## FIG. 15(c)

REPRESENTING OF DEFLECTION
ANGLE BY PREDICTED
DIFFERENCE VALUE

## FIG. 15(d)

OCCURRENCE FREQUENCY

$-180°$    $0°$    $+180°$    $\theta, \Delta\theta$

EP 1 615 192 A1

# FIG. 16

A: EQUAL-DISTANCE RESAMPLE ZONE AS L1 (>L2)

ROAD SHAPE

B: EQUAL-DISTANCE
RESAMPLE ZONE
AS L2 (<L1)

# FIG. 17(a)

CURVATURE RADIUS IS SMALL
→ ERROR IS SMALL

# FIG. 17(b)

CURVATURE RADIUS IS LARGE
→ ERROR IS LARGE

FIG. 18

RESAMPLE SHAPE

ROAD SHAPE

FIG. 19(a)        FIG. 19(b)        FIG. 19(c)

EP 1 615 192 A1

<table>
<tr><td colspan="3" align="center"><strong>INTERNATIONAL SEARCH REPORT</strong></td><td>International application No.<br>PCT/JP2004/015408</td></tr>
</table>

**A. CLASSIFICATION OF SUBJECT MATTER**
Int.Cl⁷ G09B29/00

According to International Patent Classification (IPC) or to both national classification and IPC

**B. FIELDS SEARCHED**

Minimum documentation searched (classification system followed by classification symbols)
Int.Cl⁷ G09B29/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-023357 A (Matsushita Electric Industrial Co., Ltd.), 24 January, 2003 (24.01.03), Par. Nos. [0012] to [0037], [0054] to [0093]; Figs. 1, 11<br>& WO 2002/091587 A1 & CA 2443268 A1<br>& US 2003/0093221 A1 & EP 1385269 A1 | 1-11,13,14<br>12 |
| Y | JP 2003-281690 A (Matsushita Electric Industrial Co., Ltd.), 03 October, 2003 (03.10.03), Par. No. [0019]<br>(Family: none) | 12 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 December, 2004 (15.12.04) | Date of mailing of the international search report<br>28 December, 2004 (28.12.04) |
|---|---|
| Name and mailing address of the ISA/<br>Japanese Patent Office | Authorized officer |
| Facsimile No. | Telephone No. |

Form PCT/ISA/210 (second sheet) (January 2004)